# FASCICULE DE BREVET EUROPEEN

(11) **EP 0 700 609 B1**
(45) Date de publication et mention de la délivrance du brevet: **27.08.1997**
(21) Numéro de dépôt: 94917040.1
(22) Date de dépôt: 20.05.1994
(51) Int. Cl.: H04B 15/02

(54) **APPAREIL D'ANTIPARASITAGE**
GERAT ZUR INTERFERENZREDUKTION
INTERFERENCE SUPPRESSOR APPARATUS

(30) Priorité: 24.05.1993 FR 9306391
(43) Date de publication de la demande: 13.03.1996
(73) Titulaire: CASTELLA, Jean-Pierre, F-83890 Besse-sur-Issole (FR); FILAIRE, Christian, F-06100 Nice (FR)
(72) Inventeur: CASTELLA, Jean-Pierre, F-83890 Besse-sur-Issole (FR); FILAIRE, Christian, F-06100 Nice (FR)
(74) Mandataire: Hautier, Jean-Louis
(86) Numéro de dépôt international: FR9400600
(87) Numéro de publication internationale: WO9428649

(56) Documents cités:
- US-A- 3 256 487
- US-A- 4 081 740

## Description

La présente invention concerne un appareil d'antiparasitage des parasites d'origine électrique et/ou électromagnétique, qui sont dues à l'environnement extérieur et aux différents appareillages électriques et/ou électroniques utilisés dans toute machine moderne, telle qu'un véhicule automobile.

*L'état de la technique peut être défini par le document FR-A-2.538.974 qui concerne un circuit de formage d'onde pour appareil de contrôle de moteur, qui applique un signal pulsatoire périodique, accompagné par une distorsion de forme d'onde sous l'effet du bruit ou de parasites, à un filtre pour amortir le bruit, le niveau du signal de sortie dudit filtre étant comparé avec celui d'une tension de référence ; cette tension de référence est produite par un générateur qui reçoit le signal de sortie et qui fait en sorte, à l'aide d'un circuit de nivellement que le niveau variable maximal de la tension de référence puisse être réglé à une valeur prédéterminée inférieure au niveau du signal de sortie.*

*Le document FR-A-2.672.451 concerne un circuit d'isolation de masse qui relie des circuits électroniques d'un premier étage et d'un dernier étage, ledit circuit comprend des lignes de transmission de signaux pour une pluralité de canaux. L'interconnexion de deux circuits électroniques est effectuée à l'aide de câbles blindés, des bornes de masse discrètes étant prévues sur l'un des circuits à raison d'une pour chaque canal et chaque tresse de blindage est reliée de façon indépendante à une* *bande de masse discrète correspondante. Il en résulte qu'aucun circuit de boucle n'est formé par l'intermédiaire de ces tresses et qu'aucun bruit n'est induit par l'intermédiaire de celles-ci dans les circuits électroniques par les bruits extérieurs.*

L'état de la technique ne propose pas les avantages de la présente invention.

Ces avantages sont d'une part de permettre un antiparasitage de l'ensemble des parasites présents dans une machine, c'est-à-dire que le déparasitage touche les parasites de faibles amplitudes comme ceux de grandes amplitudes.

D'autre part, l'appareil selon l'invention est très simple et unique, il permet donc un antiparasitage efficace et peu onéreux.

La réglementation sur les émissions de gaz polluants des voitures particulières entraîne pour les nouveaux véhicules à moteurs à essence des dispositifs d'injection monopoint ou multipoint, un pot catalytique à 3 voies, et un dispositif de récupération et de récupération et de recyclage des vapeurs d'essence au réservoir.

En ce qui concerne les moteurs diesel il y a une évolution de l'injection (débit de pompe et préchauffage).

Afin de satisfaire aux normes, les moteurs modernes sont contrôlés en permanence par différentes sondes et capteurs utilisant plusieurs technologies dont les principales sont des capteurs électromagnétiques, ou des capteurs piezorésistifs, ou des capteurs piézo-électriques ou des capteurs à effet hall, ou bien des sondes de type CTN (à coefficient de température négative), ou encore des sondes à oxygène.

Ces sondes et capteurs renseignent en permanence le calculateur du véhicule qui pilote l'allumage et l'injection du moteur.

En théorie, ces systèmes sont très performants mais en pratique, il en est tout autrement.

Des perturbations d'origine électrique et électromagnétique, dues à l'environnement extérieur et aux différentes technologies électriques (capteurs et sondes) utilisées sur les véhicules, ont pour conséquences de perturber le fonctionnement des moteurs qui deviennent très polluants et en conséquence engendrent des consommations très élevées, ainsi qu'un malfonctionnement moteur.

Devant ces problèmes, les réseaux d'après-vente n'ont pour solution que de changer les pièces, n'apportant que peu d'améliorations.

Cela entraîne un coût d'exploitation élevé pour l'utilisateur (essence et immobilisation), et un coût de garantie élevé pour le constructeur.

*L'état de la technique peut également être défini par les documents US-A-4.081.740,* qui *possède un condensateur faisant office de filtre et d'absorbeur de parasites, mais également une bobine d'excitation, et US-A-3.256.487, qui précise que la bobine injecte un courant en opposition de phase à l'encontre des parasites.*

Néanmoins, et quel que soit le document, aucun d'entre eux ne fait état des différences d'amplitude qui peuvent exister entre les parasites. La combinaison de ces deux documents ne peut permettre d'obtenir un déparasitage aussi systématique qu'avec la présente invention.

A cet effet, l'invention propose un appareil d'antiparasitage des parasites d'origine électrique et/ou électromagnétique dues à l'environnement extérieur et aux différents appareillages électriques et/ou électroniques utilisés dans toute machine moderne telle qu'un véhicule automobile, caractérisé par le fait qu'il est constitué d'un moyen faisant office d'inhibiteur sur masse, lui-même constitué :
- d'un moyen faisant office d'antenne qui capte les parasites,
- d'un moyen faisant office de filtre, destiné à filtrer les parasites, qui est formé d'un circuit électrique qui comporte deux diodes montées en anti-parallèle, et
- d'un moyen de traitement des parasites traités par filtration destiné, d'une part, à absorber les parasites de faibles amplitudes et, d'autre part, à injecter, sur les masses de la machine et en opposition de phase, un courant à l'encontre des parasites de plus grandes amplitudes ;
le moyen faisant office d'inhibiteur sur masse est placé entre l'alimentation électrique et les différents appareillages électriques et/ou électroniques de la machine.

Le moyen de traitement, faisant office d'absorbeur des parasites de petites amplitudes, est formé par un condensateur.

Le moyen de traitement, faisant office d'injecteur de courant en opposition de phase sur les masses de la machine afin d'éliminer les parasites de plus grandes amplitudes, est formé par une bobine de self-induction.

Le moyen faisant office d'antenne est formé par le moyen de filtration, le moyen faisant office d'absorbeur et le moyen faisant office d'injecteur.

Le moyen de filtration, le moyen faisant office d'absorbeur et le moyen faisant office d'injecteur sont montés en série.

Les dessins ci-joints sont donnés à titre d'exemples indicatifs et non limitatifs. Ils représentent un mode de réalisation préféré selon l'invention. Ils permettront de comprendre aisément l'invention.

La figure 1 représente une vue schématique de l'appareil d'antiparasitage.

La figure 2 représente une vue détaillée du circuit électrique et des composants électriques et électroniques formant l'appareil d'antiparasitage.

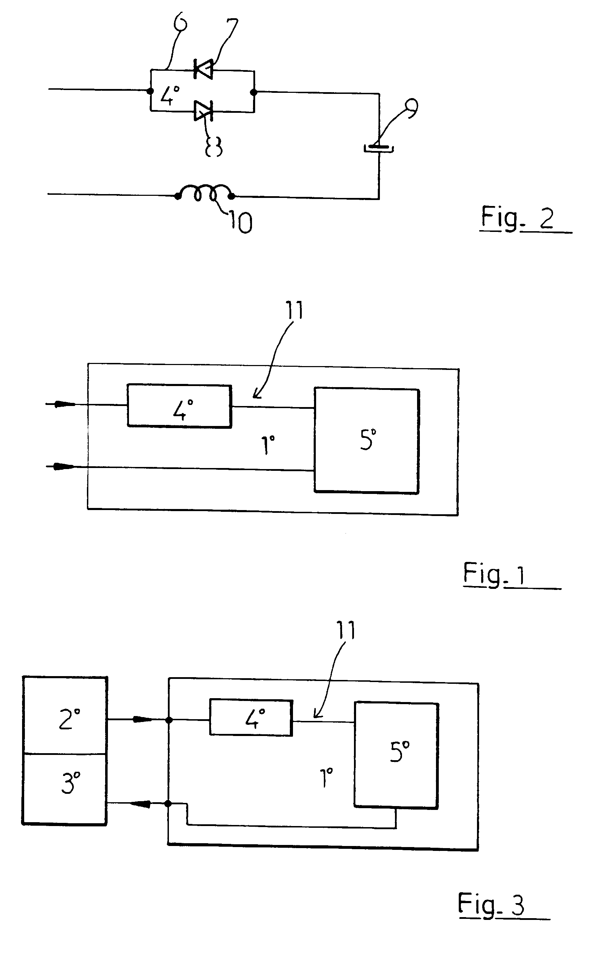

Enfin la figure 3 représente une vue schématique de l'appareil d'antiparasitage dans son contexte d'utilisation.

La présente invention concerne un appareil d'antiparasitage 1 permettant d'éliminer les parasites d'origine électrique et/ou électromagnétique qui se trouvent présents à l'intérieur d'un réseau électrique de toute machine moderne telle qu'un véhicule automobile.

Ces parasites sont généralement dus à l'environnement extérieur ainsi qu'aux différents appareillages électriques et/ou électroniques 3 que l'on rencontre dans les véhicules.

Cet appareil d'antiparasitage 1 est constitué d'un moyen faisant office d'inhibiteur sur masse qui est placé entre d'une part l'alimentation électrique 2 et les différents appareillages électriques et/ou électroniques 3 de la machine. Ces différents appareillages électriques et/ou électroniques sont constitués par des capteurs de type électromagnétique, piézo-résistif, piézo-électrique, à effet hall, ainsi qu'à des sondes de type CTN ou des sondes à oxygène.

Tous ces éléments capteurs et sondes permettent de contrôler le bon fonctionnement des moteurs des véhicules pour lesquels ils sont asservis.

De nos jours, ce type de fonctionnement est d'autant plus courant que la réglementation sur les émissions de gaz polluants est de plus en plus stricte.

Ainsi pour les moteurs à essence, il est nécessaire de contrôler les dispositifs d'injection, le pot catalytique et le dispositif de récupération de recyclage des vapeurs d'essence.

Pour les moteurs diesel, il convient de contrôler le débit de la pompe d'injection ainsi que le préchauffage du carburant qui va servir au fonctionnement du moteur.

Ces sondes et capteurs vont créer un grand nombre de parasites d'origine électrique et/ou électromagnétique, qui vont avoir tendance à dérégler le calculateur qui permet, normalement, le bon fonctionnement de l'ensemble.

Il convient donc sinon de résorber la totalité des parasites, tout du moins de les limiter au maximum.

Ceci permet de ne pas avoir d'altération du fonctionnement des capteurs et sondes formant les appareillages électriques et/ou électroniques 3 du véhicule automobile, et donc d'avoir un calculateur qui n'est plus perturbé dans son fonctionnement.

Ce moyen faisant office d'inhibiteur sur masse est essentiellement constitué d'un moyen faisant office d'antenne 11 qui peut capter les parasites dus aux appareillages électriques et/ou électroniques 3.

Il comprend aussi un appareil faisant office de filtre 4 qui permet la filtration des parasites ainsi qu'un moyen de traitement 5 des parasites déjà traités par filtration.

Ce moyen de traitement 5 permet d'une part, d'absorber les parasites de faibles amplitudes, et d'injecter sur les masses de la machine en opposition de phase, un courant qui va à l'encontre des parasites de grandes amplitudes afin de les contrer.

Le moyen faisant office de filtre 4 est formé par un circuit électrique 6 qui comporte en parallèle deux diodes 7 et 8 qui coopèrent ensemble.

Pour sa part, le moyen de traitement 5 qui a pour fonction d'absorber les parasites de petites amplitudes est formé par un condensateur 9, qui est chimique.

La fonction d'injection de courant en opposition de phase sur les masses de la machine sont le fait d'une bobine de self-induction 10.

Le moyen de traitement 5 est donc formé à la fois d'un condensateur 9 pour les parasites de petites amplitudes ainsi que d'une bobine de self-induction 10 pour les parasites de plus grandes amplitudes.

Le moyen de filtration 4, associé au moyen faisant office d'absorbeur et au moyen faisant office d'injecteur, forme le moyen faisant office d'antenne 11 qui a pour but de capter initialement les parasites.

Le montage de ces trois éléments est important.

Ainsi, le moyen de filtration 4, le moyen faisant office d'absorbeur et le moyen faisant office d'injecteur sont montés en série les uns par rapport aux autres, dans l'ordre mentionné.

### REFERENCES

1. Appareil d'antiparasitage
2. Alimentation électrique
3. Différents appareillages électriques et/ou électroniques
4. Moyen faisant office de filtre des parasites
5. Moyen de traitement des parasites ou moyens faisant office d'absorbeur et d'injecteur
6. Circuit électrique du moyen faisant office de filtre
7, 8. Diode du circuit électrique
9. Condensateur
10. Bobine de self-induction
11. Moyen faisant office d'antenne

## Revendications

1. Appareil d'antiparasitage (1) des parasites d'origine électrique et/ou électromagnétique dues à l'environnement extérieur et aux différents appareillages électriques et/ou électroniques (3) utilisés dans toute machine moderne telle qu'un véhicule automobile, caractérisé par le fait
qu'il est constitué d'un moyen faisant office d'inhibiteur sur masse, lui-même constitué :
- d'un moyen faisant office d'antenne (11) qui capte les parasites,
- d'un moyen faisant office de filtre (4), destiné à filtrer les parasites, qui est formé d'un circuit électrique (6) qui comporte deux diodes (7 et 8) montées en anti-parallèle, et
- d'un moyen de traitement (5) des parasites traités par filtration destiné, d'une part, à absorber les parasites de faibles amplitudes et, d'autre part, à injecter, sur les masses de la machine et en opposition de phase, un courant à l'encontre des parasites de plus grandes amplitudes, et
que le moyen faisant office d'inhibiteur sur masse est placé entre l'alimentation électrique (2) et les différents appareillages électriques et/ou électroniques (3) de la machine.

2. Appareil selon la revendication 1, caractérisé par le fait
que le moyen de traitement (5), faisant office d'absorbeur des parasites de petites amplitudes, est formé par un condensateur (9).

3. Appareil selon l'une quelconque des revendications 1 ou 2, caractérisé par le fait
que le moyen de traitement (5), faisant office d'injecteur de courant en opposition de phase sur les masses de la machine afin d'éliminer les parasites de plus grandes amplitudes, est formé par une bobine de self-induction (10).

4. Appareil selon l'une quelconque des revendications 1 à 3, caractérisé par le fait
que le moyen faisant office d'antenne est formé par le moyen de filtration (4), le moyen faisant office d'absorbeur et le moyen faisant office d'injecteur.

5. Appareil selon l'une quelconque des revendications 1 à 4, caractérisé par le fait
que les moyens suivants sont montés en série et dans l'ordre ci-après : le moyen de filtration (4), le moyen faisant office d'absorbeur et le moyen faisant office d'injecteur.

## Patentansprüche

1. Entstörvorrichtung (1) für Störungen elektrischer und/ oder elektromagnetischer Herkunft, verursacht durch die äußere Umgebung und verschiedene elektrische und/oder elektronische Geräte (3), die in jeder modernen Maschine wie etwa einem Kraftfahrzeug verwendet werden, dadurch gekennzeichnet, daß sie durch eine als Inhibitor an Masse wirkende Einrichtung gebildet ist, die ihrerseits gebildet ist aus:
- einer als Antenne wirkenden Einrichtung (11), die die Störungen auffängt,
- einer als Filter wirkenden Einrichtung (4), die vorgesehen ist, um die Störungen zu filtern und durch eine elektrische Schaltung (6) gebildet ist, die zwei antiparallel montierte Dioden (7 und 8) umfaßt, und
- einer Verarbeitungseinrichtung (5) für die durch Filterung verarbeiteten Störungen, die einerseits vorgesehen ist, um die Störungen mit geringen Amplituden zu absorbieren und andererseits auf die Massen der Maschine gegenphasig einen Strom entgegen den Störungen mit größeren Amplituden zu injizieren, und
daß die als Inhibitor an Masse wirkende Einrichtung zwischen der Stromversorgung (2) und den verschiedenen elektrischen und/oder elektronischen Geräten (3) der Maschine angeordnet ist.

2. Vorrichtung nach Anspruch 1, dadurch gekennzeichnet, daß die Verarbeitungseinrichtung (5), die als Absorber von Störungen mit geringen Amplituden wirkt, durch einen Kondensator (9) gebildet ist.

3. Vorrichtung nach einem der Ansprüche 1 oder 2, dadurch gekennzeichnet, daß die Verarbeitungseinrichtung (5), die als Injektor von gegenphasigem Strom auf die Massen der Maschine wirkt, um die Störungen mit größeren Amplituden zu unterdrücken, durch eine Selbstinduktionsspule (10) gebildet ist.

4. Vorrichtung nach einem der Ansprüche 1 bis 3, dadurch gekennzeichnet, daß die als Antenne wirkende Einrichtung durch die Filtereinrichtung (4), die als Absorber wirkende Einrichtung und die als Injektor wirkende Einrichtung gebildet ist.

5. Vorrichtung nach einem der Ansprüche 1 bis 4, dadurch gekennzeichnet, daß die folgenden Einrichtungen in der nachfolgenden Reihenfolge in Reihe montiert sind: die Filtereinrichtung (4), die als Absorber wirkende Einrichtung und die als Injektor wirkende Einrichtung.

## Claims

1. Suppressor (1) of electrical and/or electromagnetic interference caused by the external environment and the different electrical and/or electronic equipment (3) used in any modern machines such as automobiles, characterized in that
it consists of a device acting as suppressor connected on the ground, itself constituted by:
- a means acting as antenna (11) which picks up the interference,
- a means acting as filter (4) of the interference which consists of an electrical circuit (6) with two diodes (7 and 8) fitted in anti-parallel and,
- a means for processing (5) the filtered interference, intended on the one hand to absorb low amplitude interference and on the other to inject, onto the grounds of the machine and in opposition to the phase, a current to counter the largest amplitude interference and,
that the means acting as suppressor on the ground is installed between the electrical supply (2) and different electrical and/or electronic equipment (3) of the machine.

2. Device according to claim 1 characterized in that the processing means (5) intended to absorb low amplitude interference consist of a condenser (9),

3. Device according to any one of claims 1 or 2, characterized in that the processing means (5), acting as current injector in opposition to the phase on the machine grounds in order to eliminate the large amplitude interference, consists of a self-induction coil (10).

4. Device according to any one of claims 1 to 3 characterized in that the means acting as the antenna consists of the filtering means (4), the means acting as absorber and the means acting as injector.

5. Device according to any one of claims 1 to 4 characterized in that: the following means are fitted in series and in the following order: the filtering means (4), the means acting as absorber and the means acting as injector.
